# FASCICULE DE BREVET EUROPEEN

(11) **EP 2 151 368 B1**
(45) Date de publication et mention de la délivrance du brevet: **15.02.2012**
(21) Numéro de dépôt: 09350006.4
(22) Date de dépôt: 21.07.2009
(51) Int. Cl.: B62D 23/00, B62D 31/00

(54) **Véhicule de petite taille**
kleines Fahrzeug
small vehicle

(30) Priorité: 07.08.2008 FR 0855461
(43) Date de publication de la demande: 10.02.2010
(73) Titulaire: Mia Electric, 79140 Cerisay (FR)
(72) Inventeur: Guillez, Jean Marc, 79140 Cirières (FR)
(74) Mandataire: Tournel, Jean Louis

(56) Documents cités:
- EP-A- 1 683 710
- WO-A-99/20516

## Description

La présente invention concerne un véhicule de petite taille.

Un véhicule comprend un habitacle pour des passagers délimité par une carrosserie.

Cette carrosserie comporte au moins une ouverture fermée par des portes latérales permettant aux passagers d'avoir un accès à l'habitacle.

Dans la plus part des cas cette carrosserie est en acier et forme une coque rigide résistante et porteuse sur laquelle sont notamment fixées les portes.

Eventuellement est rapportée une structure tubulaire de renfort. *Sont connues des structures tubulaires* WO-A-9920516 *ou* EP 1683710. Chacun desdits documents peut être pris à base du preambule de la revendication 1.

Le but de l'invention est de proposer un véhicule de petite taille de conception très simple, très léger et offrant une bonne protection des occupants, notamment en cas d'accident, tout en ayant un système de porte simple permettant un accès facile. *Ce but est réalisé avec un véhicule conforme à la revendi ca t i on 1*

Ainsi, la structure tubulaire assure la fonction porteuse de carrosserie, la sécurité des passagers, supporte également les portes, ce qui assure également une rigidité supplémentaires aux portes.

D'autres particularités et avantages apparaîtront dans la description d'un mode de réalisation donné à titre d'exemple non limitatif et illustré par les dessins mis en annexe dans lesquels :
La figure 1 est une vue en perspective arrière d'un véhicule conforme à la présente invention,
La figure 2 est une vue similaire à la figure 1, la structure tubulaire et les rails de guidage des mécanismes d'ouverture des portes étant représentés,
La figure 3 est un agrandissement de la zone de la figure 2 illustrant le rail de guidage associé à l'un des deux tubes longitudinaux supérieurs de la structure tubulaire,
La figure 4 est une vue en coupe d'un mécanisme d'ouverture d'une porte selon la ligne IV-IV de la figure 3, avec ajout de la porte et de la carrosserie.
La figure 5 est une vue de dessus du véhicule de la figure 1,
La figure 6 est une vue en coupe transversale d'une porte du véhicule, et
La figure 7 est une vue en perspective de la porte de la figure 6.

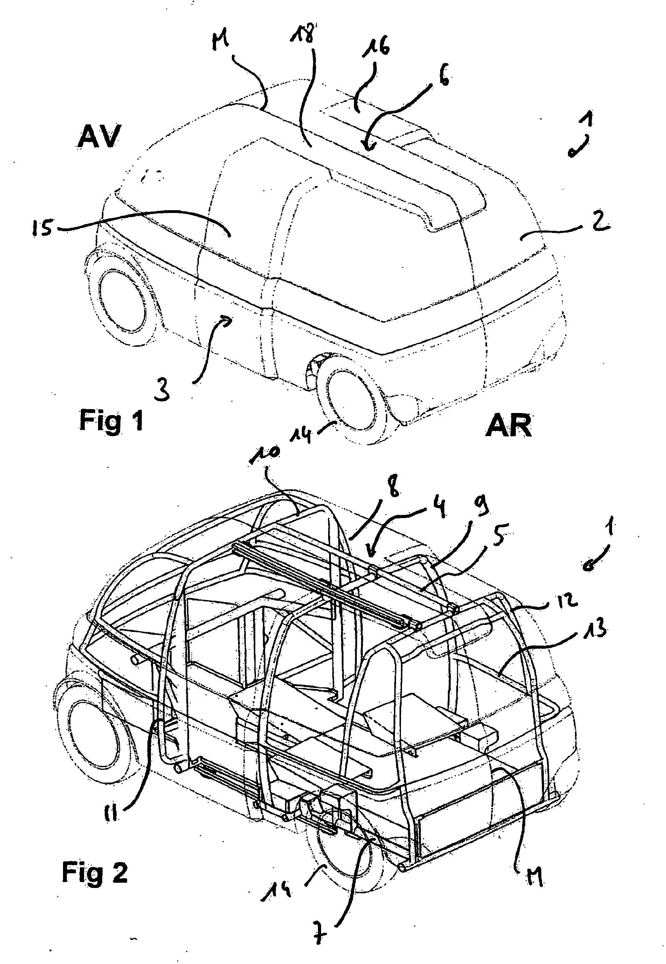

Un véhicule 1 de petite taille tel que celui illustré aux figures 1, 2 et 5 comprend un habitacle pour des passagers délimité par une carrosserie 2. Il comprend également des portes latérales 3, chaque porte latérale 3 étant mobile (ici, en translation) entre, d'une part, une position ouverte dans laquelle elle dégage une ouverture réalisée dans la carrosserie 2 et permettant aux passagers d'avoir un accès à l'habitacle et, d'autre part, une position fermée dans laquelle elle obstrue cette ouverture. Comme illustré à la figure 2, le véhicule 1 comprend également une structure tubulaire 4 autoporteuse qui a pour fonctionnalité celle du châssis et donc porter des éléments mécaniques comme le moteur, les suspensions, les batteries ... et en outre porter les panneaux de carrosserie. Cette structure tubulaire est résistante et par exemple est en forme de cage de sécurité adaptée à protéger les passagers en cas d'accident (ici, l'habitacle est délimité par cette structure 4).

De façon plus précise, la structure tubulaire 4 comprend deux tubes longitudinaux supérieurs 5 qui sont situés au niveau du toit 6 du véhicule 1, ainsi que deux tubes longitudinaux inférieurs 7 qui sont situés au niveau du plancher. Dans le présent mode de réalisation, les deux tubes longitudinaux supérieurs 5 sont transversalement disposés plus proche du plan médian longitudinal M du véhicule 1 que du bord latéral correspondant de la carrosserie 2. De préférence, la distance séparant un tube longitudinal supérieur 5 du plan médian longitudinal M est inférieure à celle séparant le même tube 5 du bord latéral correspondant de la carrosserie 2. Ici, la distance séparant un tube longitudinal supérieur 5 du plan médian longitudinal M est sensiblement la moitié de celle séparant le même tube 5 du bord latéral correspondant de la carrosserie 2. Toujours dans le présent mode de réalisation, les deux tubes longitudinaux inférieurs 7 sont transversalement disposés en retrait vers l'intérieur par rapport au bord latéral correspondant de la carrosserie 2.

La structure tubulaire comprend également un arceau avant 8 et un arceau arrière 9, chacun de ces deux arceaux 8, 9 comprenant une barre supérieure horizontale 10 qui s'étend sur toute la largeur du véhicule 1, et deux barres verticales 11, de façon à avoir une structure en U inversé. Dans le présent mode de réalisation, chacun de ces deux arceaux 8, 9 est relié par son extrémité supérieure (ici, par sa barre horizontale 10) aux deux tubes longitudinaux supérieurs 5, et par sa base (ici, par l'extrémité inférieure des deux barres verticales 11) aux deux tubes longitudinaux inférieurs 7. Dans le présent exemple, la structure tubulaire 4 comprend un troisième arceau transversal 12 qui est situé à l'arrière de l'arceau arrière 9. Ce troisième arceau 12 a une structure en U inversé comme les deux premiers arceaux, sauf que ses deux barres verticales 11 sont de hauteur réduite. De ce fait, il est relié, par son extrémité supérieure (par sa barre supérieure 10), aux deux tubes longitudinaux supérieurs 5, et par sa base à deux tubes longitudinaux horizontaux 13 qui se situent juste au-dessus de l'espace de dégagement des roues arrières 14 du véhicule 1 et qui s'étendent de l'arceau arrière 9 à l'extrémité arrière de la structure tubulaire 4.

Par ailleurs, chaque porte latérale 3 (cf. figures 1 et 5 à 7) comporte une aile principale 15 qui s'étend sensiblement verticalement et qui est adaptée à dégager ou à obstruer l'ouverture d'accès à l'habitacle, une aile supérieure 16 qui s'étend sensiblement horizontalement depuis l'extrémité supérieure de l'aile principale 15, et une aile inférieure 17 qui s'étend sensiblement horizontalement depuis l'extrémité inférieure de l'aile principale 15. De ce fait, chaque porte latérale 3 a la forme générale d'un C. De façon plus précise, l'aile supérieure 16 s'étend vers le centre du toit 6, et l'aile inférieure 17 vers le centre du plancher. Dans le présent mode de réalisation, chaque aile supérieure 16 s'étend transversalement sur une distance a égale au moins au quart de la largeur A du véhicule 1, et, de préférence, au tiers de cette largeur A.

L'aile supérieure 16, quand la porte latérale 3 correspondante est dans sa position ouverte, découvre un évidement réalisé dans la carrosserie 2 afin de faciliter le passage de la partie supérieure d'un passager (au moins sa tête), et, quand la porte est dans sa position fermée, recouvre cet évidement. Ainsi, l'aile supérieure 16 de chaque porte latérale 3 forme, avec une plaque horizontale 18 qui est fixée à la structure tubulaire 4, le toit 6 du véhicule 1.

De même, l'aile inférieure 17, quand la porte latérale 3 correspondante est dans sa position ouverte, découvre un évidement réalisé dans la carrosserie 2 afin de faciliter le passage de la partie inférieure d'un passager (au moins ses pieds), et, quand la porte est dans sa position fermée, recouvre cet évidement. Ainsi, l'aile inférieure 17 de chaque porte latérale 3 forme, avec une plaque horizontale qui est fixée à la structure tubulaire, le plancher du véhicule 1.

Conformément à la présente invention, les mécanismes de liaison et d'ouverture des portes latérales 3 sont fixés à la structure tubulaire 4. De façon plus précise, dans le présent exemple, les mécanismes supérieurs d'ouverture sont fixés aux deux tubes longitudinaux supérieurs 5, et les mécanismes inférieurs d'ouverture sont fixés aux deux tubes longitudinaux inférieurs 7. De même, les mécanismes supérieurs d'ouverture sont reliés aux ailes supérieures 16 et les mécanismes inférieurs d'ouverture sont reliés aux ailes inférieures 17.

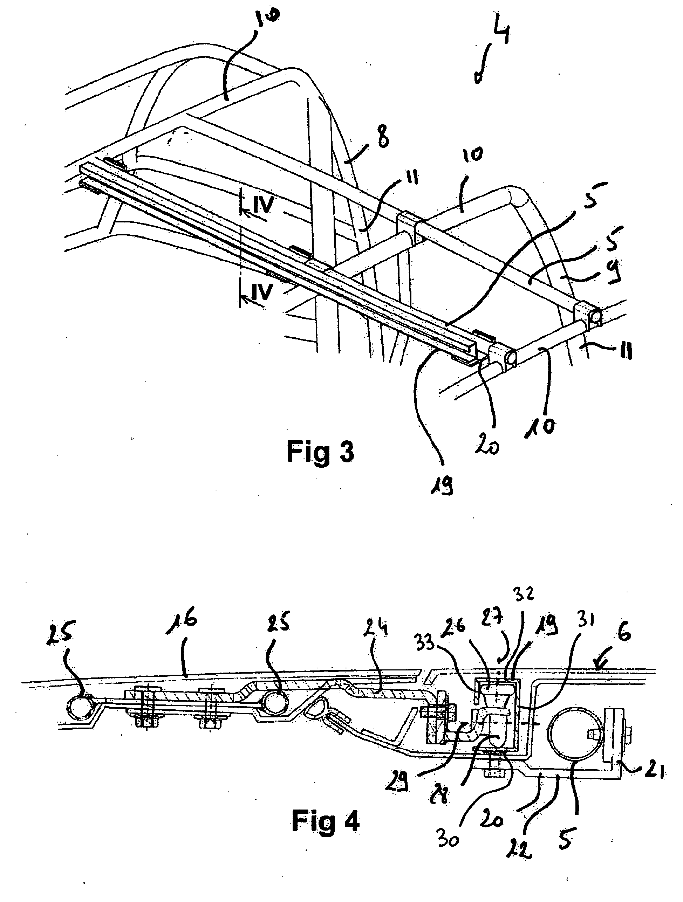

Dans le présent mode de réalisation, comme on peut le voir à la figure 3, les mécanismes d'ouverture sont des mécanismes à rail de guidage dont les rails 19 sont fixés aux tubes longitudinaux supérieurs 5 et inférieurs 7. De façon plus précise, chaque rail de guidage 19 est porté par au moins une patte de fixation 20 (ici, trois) qui est fixée à la structure tubulaire 4. Ici, les pattes de fixation 20 supportant les rails de guidage supérieurs 19 sont fixées au tube longitudinal supérieur 5 correspondant, et celles supportant les rails de guidage inférieurs 19 sont fixées au tube longitudinal inférieur 7 correspondant. De façon plus précise, chaque patte de fixation 20 est une équerre fixée (ici, vissée) au tube longitudinal 5, 7 correspondant par sa portion verticale 21, et au rail de guidage 19 par sa portion horizontale 22 (cf. figure 4).

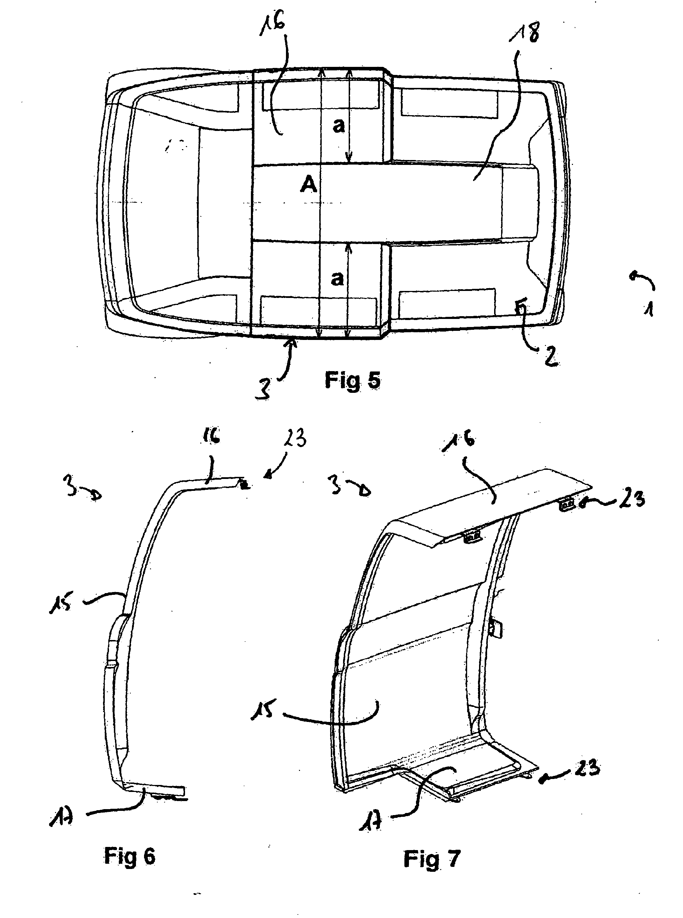

A ces rails 19 sont associés des ensembles roulants 23 qui sont portés par les extrémités longitudinales libres des ailes supérieure 16 et inférieure 17 des portes latérales 3 (cf. figures 6 et 7).

Chaque ensemble roulant 23 associé à un rail de guidage supérieur 19 est porté par une patte de rigidification 24 qui est elle-même fixée à des tubes de renfort 25 de la porte 3. Dans le présent mode de réalisation, chacun de ces ensembles 23 comprend, d'une part un galet horizontal 26 qui est monté en rotation selon un axe vertical 27, et, d'autre part, un galet vertical 28 qui est monté en rotation selon un axe horizontal transversal 29. Chaque paire de galets 26, 28 est montée roulant dans le rail de guidage supérieur 19 qui comporte une piste horizontale inférieure 30 sur laquelle roule le galet vertical 28, une piste verticale intérieure 31 qui est disposée du côté intérieur du toit 6 et contre l'extrémité supérieure de laquelle roule le galet horizontal 26, une piste horizontale supérieure 32 faisant face à la piste horizontale inférieure 30, et une piste verticale extérieure 33 qui est disposée du côté extérieur du toit 6 et contre laquelle roule le galet horizontal 26, la hauteur de la piste verticale extérieure 33 sont limitée de façon à permettre à la patte de rigidification 24 de porter les galets 26,28.

Il serait ainsi possible que les mécanismes d'ouverture ne soient pas des mécanismes à rails et galets, mais à biellettes articulées possédant des pivots d'articulation qui sont fixées aux barres longitudinales, ou un système mixte entre celui à rails et galets et celui à biellettes, comme dans la demande de brevet FR 2 866 916.

Cette structure tubulaire porteuse permet d'utiliser des panneaux de carrosserie très légers qui offrent peu de résistance au choc, de les rapporter facilement sur la structure tubulaire. On allège donc le véhicule tout en préservant la sécurité. On peut utiliser des panneaux en matière composite obtenus par exemple par moulage. Ces panneaux sont souples et acceptent des déformations élastiques importantes lors de chocs ce qui évite de devoir les remettre en état lorsque les chocs sont faibles ce qui n'est pas le cas avec de la tôle en acier qui se déforme plastiquement au moindre choc.

## Revendications

1. Véhicule (1) de petite taille comprenant un habitacle pour des passagers délimité par une carrosserie comportant au moins une ouverture fermée par des portes latérales (3) permettant aux passagers d'avoir un accès à l'habitacle, et une structure tubulaire (4) *portant la carrosserie,* **caractérisé en ce que** la structure tubulaire *comprend deux tubes longitudinaux supérieurs (5) situés au niveau du toit (6) du véhicule (1)* disposés plus proche du plan médian longitudinal M du véhicule (1) que du bord latéral correspondant de la carrosserie (2) *et deux tubes longitudinaux inférieurs (7) situés au niveau du plancher du véhicule (1)* disposés en retrait vers l'intérieur par rapport au bord latéral correspondant de la carrosserie *sur lesquels tubes sont fixés* les mécanismes de liaison et d'ouverture des portes latérales (3).

2. Véhicule (1) selon la revendications 1, **caractérisé en ce que** chaque porte latérale (3) comporte une aile principale (15) sensiblement verticale et adaptée à obstruer un accès à l'habitacle, une aile supérieure (16) sensiblement horizontale et s'étendant depuis l'extrémité supérieure de l'aile principale (15) vers le centre du toit, et une aile inférieure (17) sensiblement horizontale et s'étendant depuis l'extrémité inférieure de l'aile principale (15) vers le centre du plancher, de façon à avoir une forme générale en C.

3. Véhicule (1) selon la revendication 2, **caractérisé en ce que** chaque aile supérieure (16) s'étend transversalement sur une distance (a) égale au moins au quart de la largeur (A) du véhicule (1), et, de préférence, au tiers de cette largeur.

4. Véhicule (1) selon l'une des revendications 2 ou 3, **caractérisé en ce que** les mécanismes d'ouverture des portes (3) sont reliés aux ailes supérieures (16) et inférieures (17), de préférence au niveau des extrémités longitudinales libres des ailes supérieures (16) et inférieures (17).

5. Véhicule (1) selon la revendication 4, **caractérisé en ce que** les extrémités longitudinales libres des ailes supérieures (16) et inférieures (17) sont équipées de galets (26, 28) coopérant avec des rails de guidage (19) des mécanismes d'ouverture.

6. Véhicule (1) selon la revendication 5 dépendantes de la revendication 3 ou 5, **caractérisé en ce que** les rails (19) sont fixés aux tubes longitudinaux (5, 7) correspondants.

7. Véhicule selon l'une des revendications 1 à 4 , **caractérisé en ce que** les mécanismes d'ouverture sont des mécanismes à biellettes articulées possédant des pivots d'articulation qui sont fixées à la structure tubulaire (4).

8. Véhicule selon l'une quelconque des revendications précédentes **caractérisé en ce que** la structure tubulaire est autoporteuse et constitue une cage de sécurité.

## Claims

1. Small-sized vehicle (1) comprising a passenger compartment bounded by a body comprising at least one opening closed by side doors (3) providing the passengers with access to the passenger compartment, and a tubular structure (4) supporting the body, **characterised in that** the tubular structure comprises two top longitudinal tubes (5) arranged on a level with the roof (6) of the vehicle (1) disposed closer to the longitudinal median plane M of the vehicle (1) than to the corresponding lateral edge of the body (2) and two bottom longitudinal tubes (7) arranged on a level with the floor of the vehicle (1) set back from the corresponding lateral edge of the body towards the interior, on which tubes the mechanisms for connecting and opening the side doors (3)are mounted.

2. Vehicle (1) as claimed in claim 1, **characterised in that** each side door (3) comprises a substantially vertical main wing (15) designed to obstruct an access to the compartment, a substantially horizontal top wing (16) extending from the top end of the main wing (15) towards the centre of the roof, and a substantially horizontal bottom wing (17) extending from the bottom end of the main wing (15) towards the centre of the floor so as to create a general C shape.

3. Vehicle (1) as claimed in claim 2, **characterised in that** each top wing (16) extends transversely across a distance (a) equal to at least a quarter of the width (A) of the vehicle (1) and preferably a third of this width.

4. Vehicle (1) as claimed in one of claims 2 or 3, **characterised in that** the opening mechanisms of the doors (3) are connected to the top (16) and bottom (17) wings, preferably on a level with the free longitudinal ends of the top (16) and bottom (17) wings.

5. Vehicle (1) as claimed in claim 4, **characterised in that** the free longitudinal ends of the top (16) and bottom (17) wings are equipped with rollers (26, 28) co-operating with guide tracks (19) of the opening mechanisms.

6. Vehicle (1) as claimed in claim 5 dependent on claim 3 or 5, **characterised in that** the tracks (19) are secured to the corresponding longitudinal tubes (5, 7).

7. Vehicle as claimed in one of claims 1 to 4, **characterised in that** the opening mechanisms are articulated rod mechanisms with articulatingpins which are secured to the tubular structure (4).

8. Vehicle as claimed in any of the preceding claims, **characterised in that** the tubular structure is self-supporting and constitutes a safety cage.

## Patentansprüche

1. Kleines Fahrzeug (1), umfassend eine Fahrgastzelle für Fahrgäste, die durch eine Karosserie begrenzt wird, die zumindest eine durch seitliche Türen (3) geschlossene Öffnung aufweist, die den Fahrgästen den Zutritt zu der Fahrgastzelle ermöglicht, und eine röhrenförmige Struktur (4), welche die Karosserie trägt, **dadurch gekennzeichnet, dass** die röhrenförmige Struktur zwei obere längsgerichtete Rohre (5) umfasst, die sich im Bereich des Daches (6) des Fahrzeugs (1) befinden, die näher an der Längsmittelebene M des Fahrzeugs (1) als an dem entsprechenden seitlichen Rand der Karosserie (2) angeordnet sind, und zwei untere längsgerichtete Rohre (7), die sich im Bereich des Bodens des Fahrzeugs (1) befinden, die relativ zu dem entsprechenden seitlichen Rand der Karosserie in das Innere zurückgezogen angeordnet sind, wobei an diesen Rohren die Mechanismen für die Verbindung und die Öffnung der seitlichen Türen (3) befestigt sind.

2. Fahrzeug (1) nach Anspruch 1, **dadurch gekennzeichnet, dass** jede seitliche Tür (3) einen Hauptflügel (15), der im Wesentlichen vertikal ist und dafür geeignet ist, einen Zutritt zu der Fahrgastzelle zu versperren, einen oberen Flügel (16), der im Wesentlichen horizontal ist und sich von dem oberen Ende des Hauptflügels (15) in Richtung der Mitte des Daches erstreckt, und einen unteren Flügel (17), der im Wesentlichen horizontal ist und sich von dem unteren Ende des Hauptflügels (15) in Richtung der Mitte des Bodens erstreckt, aufweist, derart, dass sie eine allgemeine C-Form hat.

3. Fahrzeug (1) nach Anspruch 2, **dadurch gekennzeichnet, dass** sich jeder obere Flügel (16) in Querrichtung über eine Entfernung (a) erstreckt, die mindestens gleich dem Viertel der Breite (A) des Fahrzeugs (1) und, vorzugsweise, dem Drittel dieser Breite ist.

4. Fahrzeug (1) nach einem der Ansprüche 2 oder 3, **dadurch gekennzeichnet, dass** die Mechanismen für die Öffnung der Türen (3) mit den oberen (16) und unteren Flügeln (17) verbunden sind, vorzugsweise im Bereich der freien längsgerichteten Enden der oberen (16) und unteren (17) Flügel.

5. Fahrzeug (1) nach Anspruch 4, **dadurch gekennzeichnet, dass** die freien längsgerichteten Enden der oberen (16) und unteren (17) Flügel mit Rollen (26, 28) versehen sind, die mit den Führungsschienen (19) der Öffnungsmechanismen zusammenwirken.

6. Fahrzeug (1) nach Anspruch 5, soweit von Anspruch 3 oder 5 abhängig, **dadurch gekennzeichnet, dass** die Schienen (19) an den entsprechenden längsgerichteten Rohren (5, 7) befestigt sind.

7. Fahrzeug nach einem der Ansprüche 1 bis 4, **dadurch gekennzeichnet, dass** die Öffnungsmechanismen Gelenkkugel-Mechanismen sind, die Gelenkzapfen aufweisen, die an der röhrenförmigen Struktur (4) befestigt sind.

8. Fahrzeug nach einem der vorhergehenden Ansprüche, **dadurch gekennzeichnet, dass** die röhrenförmige Struktur selbsttragend ist und einen Sicherheitskäfig bildet.
